(19) **Europäisches Patentamt / European Patent Office / Office européen des brevets**

(11) **EP 4 435 728 B1**

(12) # EUROPEAN PATENT SPECIFICATION

(45) Date of publication and mention
of the grant of the patent:
**08.04.2026 Bulletin 2026/15**

(21) Application number: **23191013.4**

(22) Date of filing: **11.08.2023**

(51) International Patent Classification (IPC):
***G06T 15/50*** *(2011.01)*

(52) Cooperative Patent Classification (CPC):
**G06T 15/506**

(54) **IMAGE PROCESSING SYSTEM, PROGRAM, AND IMAGE PROCESSING METHOD**

BILDVERARBEITUNGSSYSTEM, PROGRAMM UND BILDVERARBEITUNGSVERFAHREN

SYSTÈME, PROGRAMME ET PROCÉDÉ DE TRAITEMENT D'IMAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.03.2023 JP 2023048882**

(43) Date of publication of application:
**25.09.2024 Bulletin 2024/39**

(73) Proprietor: **FUJIFILM Business Innovation Corp.
Minato-ku
Tokyo (JP)**

(72) Inventors:
• **TAKAISHI, Shinya
Yokohama-shi, Kanagawa (JP)**
• **NISHIKUNI, Yuichi
Yokohama-shi, Kanagawa (JP)**
• **MATSUBARA, Koichi
Yokohama-shi, Kanagawa (JP)**
• **KUROTSU, Daichi
Yokohama-shi, Kanagawa (JP)**

(74) Representative: **Kurig, Thomas
Becker Kurig & Partner
Patentanwälte mbB
Bavariastraße 7
80336 München (DE)**

(56) References cited:
**US-A1- 2015 355 867     US-A1- 2018 150 995**

**Description**

BACKGROUND OF THE INVENTION

(i) Field of the Invention

The present invention relates to an image processing system, a program, and an image processing method.

(ii) Description of Related Art

A preview technique of checking a finished state of a printed matter before creation of the printed matter is known.
JP2015-233240A discloses a display processing device in which a document surface displaying document data is disposed in a virtual three-dimensional space and a light source is disposed at a position determined based on a posture of a display as a display unit to generate a document display surface, which is visually recognized from a viewpoint located on a normal line of the document surface, and to display an image including the document display surface on the display unit as a preview image in which a printing result of the document data is estimated.
US 2015/0355867 A1 discloses a display processing apparatus including a first acquisition unit for acquiring light source information including a first relative position of a light source with respect to a display unit, a detection unit for detecting posture information of the display unit, a second acquisition unit for acquiring the posture information, a third acquisition unit for acquiring document data, a calculation unit for calculating a second relative position of the light source with respect to the display unit, a generation unit for generating a document display surface where a state in which a document surface displaying the document data is disposed in a virtual three-dimensional space and also the light source is disposed at the second relative position with respect to the document surface is converted to a two-dimensional image, and a display control unit for executing control to display a preview image on the display unit.
US 2018/150995 A1 discloses an image processing apparatus including: a first acquiring unit configured to acquire shape information indicating a shape of a surface of an object, and reflection characteristic information indicating a reflection characteristic of the object; a second acquiring unit configured to acquire viewpoint information about a viewpoint of viewing the object, and light source information about a light source applying light to the object; an emphasizing unit configured to emphasize a light reflection intensity of the object so as to increase a degree of emphasis as a degree of flatness of the shape increases in image data representing the object, based on the reflection characteristic information, the viewpoint information, the light source information, and the shape information; and an output unit configured to output the image data representing the object having the light reflection intensity is emphasized by the emphasizing unit.

SUMMARY OF THE INVENTION

In a preview of a printed matter, a user often operates an inclination of the printed matter such that an image of the printed matter is displayed in which light of a light source reflected by the printed matter appears at a maximum brightness or a brightness around the maximum brightness. However, in the preview of the printed matter, for example, in an environment in which a position of the light source or a viewpoint can be changed, the image of the printed matter as described above may be difficult to be displayed with the operation of the inclination of the printed matter by the user.
The present invention is provided in the appended claims. The following disclosure serves a better understanding of the present invention.
An object of the present invention is to enable a user to view, in a preview of a printed matter, an image of the printed matter in which light of a light source reflected by the printed matter appears at a maximum brightness or a brightness around the maximum brightness.
According to a first aspect of the present disclosure, there is provided an image processing system including a processor configured to cause a display unit to display an image of a printed matter in which light of a light source reflected by the printed matter appears at a maximum brightness or a brightness around the maximum brightness, on an initial screen of a preview.
According to a second aspect of the present disclosure, there is provided the image processing system according to the first aspect, in which the processor may be configured to cause a display unit to display an image of the printed matter in which light of a light source reflected at a center of the printed matter appears at a maximum brightness or a brightness around the maximum brightness on the initial screen of the preview.
According to a third aspect of the present disclosure, there is provided the image processing system according to the first aspect, in which the processor may be configured to cause a display unit to display an image of the printed matter in which light of a light source reflected by a metallic portion of the printed matter appears at a maximum brightness or a brightness around the maximum brightness on the initial screen of the preview.
According to a fourth aspect of the present disclosure, there is provided the image processing system according to any one of the first to third aspects, in which the processor may be configured to acquire an image representing an observation environment of the printed matter and specify a position of the light source based on brightness information of the image representing the observation environment.

According to a fifth aspect of the present disclosure, there is provided the image processing system according to the fourth aspect, in which the processor may be configured to specify a position with a highest brightness in the image representing the observation environment as the position of the light source.

According to a sixth aspect of the present disclosure, there is provided the image processing system according to the fourth or fifth aspect, in which the image representing the observation environment may be a spherical image.

According to a seventh aspect of the present disclosure, there is provided the image processing system according to any one of the first to sixth aspects, in which the processor may be configured to set, based on a position of the light source, an angle of the printed matter and a position of a viewpoint in which the light of the light source reflected by the printed matter is incident on the viewpoint at the maximum brightness or the brightness around the maximum brightness as an initial angle of the printed matter and an initial position of the viewpoint, respectively, and generate the image of the printed matter on the initial screen of the preview based on the initial angle of the printed matter and the initial position of the viewpoint.

According to an eighth aspect of the present disclosure, there is provided the image processing system according to the seventh aspect, in which the processor may be configured to set the initial angle of the printed matter and the initial position of the viewpoint such that the viewpoint does not have a positional relationship of looking up at the printed matter.

According to a ninth aspect of the present disclosure, there is provided the image processing system according to the seventh aspect, in which the processor may be configured to, in a case where the printed matter is inclined within a range of a predetermined angle from the initial angle of the printed matter on the initial screen of the preview, set the initial angle of the printed matter and the initial position of the viewpoint such that an upper end of the printed matter does not fall toward a front side with respect to the viewpoint and a lower end of the printed matter does not lift above the viewpoint.

According to a tenth aspect of the present disclosure, there is provided the image processing system according to the seventh aspect, in which the processor may be configured to set the initial position of the viewpoint such that the light source and the viewpoint are located on the same side with respect to the printed matter.

According to an eleventh aspect of the present disclosure, there is provided the image processing system according to the seventh aspect, in which the processor may be configured to set the initial angle of the printed matter and the initial position of the viewpoint such that a half vector of a vector of the light source and a vector of the viewpoint matches a dominant normal vector of the printed matter.

According to a twelfth aspect of the present disclosure, there is provided the image processing system according to any one of the first to eleventh aspects, in which the printed matter may include at least one of metallic or clear coloring material.

According to a thirteenth aspect of the present disclosure, there is provided a program that causes a computer to execute a process including causing a display unit to display an image of a printed matter in which light of a light source reflected by the printed matter appears at a maximum brightness or a brightness around the maximum brightness, on an initial screen of a preview.

According to a fourteenth aspect of the present disclosure, there is provided an image processing method including causing a display unit to display an image of a printed matter in which light of a light source reflected by the printed matter appears at a maximum brightness or a brightness around the maximum brightness, on an initial screen of a preview.

According to the first, thirteen, or fourteenth aspects of the present invention, the image of the printed matter in which the light of the light source reflected by the printed matter appears at the maximum brightness or the brightness around the maximum brightness is displayed on the initial screen of the preview.

According to the second aspect of the present invention, the image of the printed matter in which the light of the light source reflected at the center of the printed matter appears at the maximum brightness or the brightness around the maximum brightness is displayed on the initial screen of the preview.

According to the third aspect of the present invention, the image of the printed matter in which the light of the light source reflected by the metallic portion of the printed matter appears at the maximum brightness or the brightness around the maximum brightness is displayed on the initial screen of the preview.

According to the fourth or fifth aspect of the present invention, the position of the light source according to the observation environment of the printed matter is specified.

According to the sixth aspect of the present invention, the position of the light source according to the spherical image is specified.

According to the seventh aspect of the present invention, the image of the printed matter according to the initial angle of the printed matter and the initial position of the viewpoint is displayed on the initial screen of the preview.

According to the eighth, ninth, or eleventh aspect of the present invention, the initial angle of the printed matter and the initial position of the viewpoint, which are the same as or close to the actual viewing of the printed matter, may be set.

According to a tenth aspect of the present invention, the initial position of the viewpoint, which is the same as or close to the actual viewing of the printed matter may be set.

According to the twelfth aspect of the present invention, at least one glossy feeling of metallic or clear is checked in the preview of the printed matter.

BRIEF DESCRIPTION OF THE DRAWINGS

Exemplary embodiment(s) of the present invention will be described in detail based on the following figures, wherein:

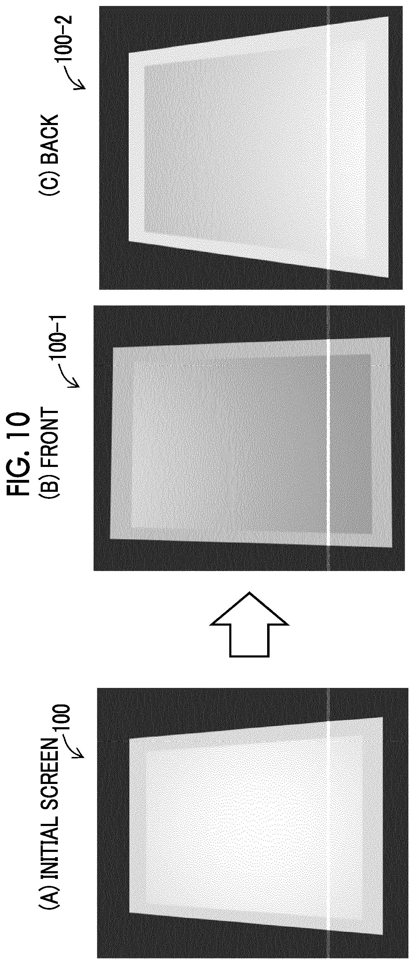

Fig. 1 is a functional block diagram of an image processing system according to an exemplary embodiment;
Fig. 2 is a flowchart showing processing performed by the image processing system;
Fig. 3 is an explanatory diagram of a camera position and a printed matter angle in a preview of a single light source;
Fig. 4 is an explanatory diagram of a camera position and a printed matter angle in a preview using an environment image;
Fig. 5 is an explanatory diagram of a camera position and a printed matter angle in a preview using an environment image;
Fig. 6 is an explanatory diagram of a camera position and a printed matter angle in a preview using an environment image;
Figs. 7A, 7B, and 7C are explanatory diagrams of Example 1;
Figs. 8A, 8B, and 8C are explanatory diagrams of Example 2;
Figs. 9A, 9B, and 9C are explanatory diagrams of Example 3;
Parts (A), (B), and (C) in Fig. 10 are diagrams showing examples of a preview image, where the part (A) in Fig. 10 shows an example of an image on an initial screen of a preview, the part (B) in Fig. 10 shows an example of an image in a state in which the printed matter is inclined toward the front, and the part (C) in Fig. 10 shows an example of an image in a state in which the printed matter is inclined toward the back;

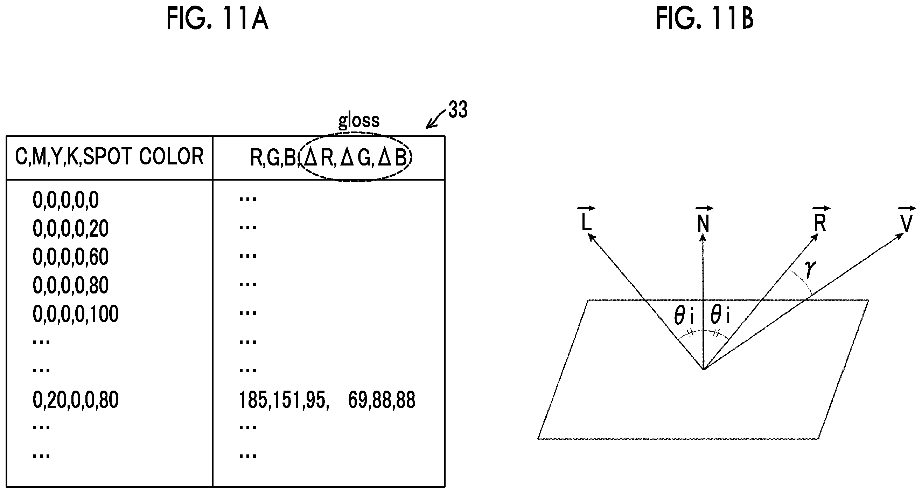

Fig. 11A is a diagram showing an example of a color conversion table, and Fig. 11B is a diagram for describing a relationship between an incident angle and an angle $\gamma$ formed by a mirror-surface reflection direction and a line-of-sight direction; and

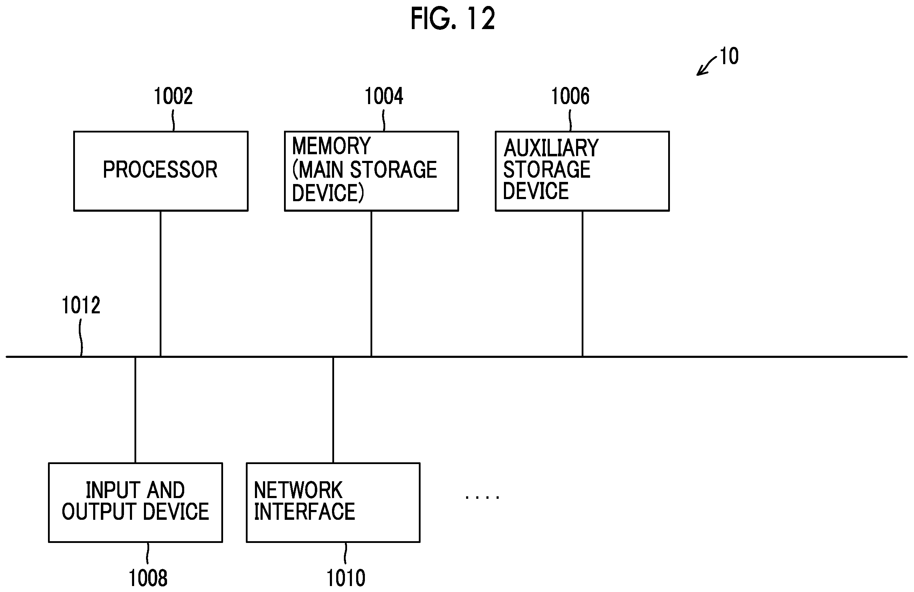

Fig. 12 is a diagram showing an example of a hardware configuration of a computer.

DETAILED DESCRIPTION OF THE INVENTION

Hereinafter, exemplary embodiments will be described in detail with reference to accompanying drawings. Configurations described below are examples for description and can be changed as appropriate. Further, in a case where a plurality of exemplary embodiments, modification examples, or the like are included in the following, characteristic portions thereof are assumed from the beginning to be combined as appropriate and used. Identical elements are designated by identical reference numerals in all drawings, and duplicate description is omitted.

<Terminology>

A printed image is an image printed on a recording medium. Printed image data is data representing a printed image input to an image processing system or generated in the image processing system. The printed image data may be, for example, data in which each pixel of the printed image data is represented by a pixel value of RGB or CMYK, and the pixel value may be a density value of CMYK. Further, the pixel value of the image data may include the pixel value of a spot color other than CMYK. A format of the printed image data is not limited.

An image forming material is a material such as a coloring material that is adhered to the recording medium for representing the printed image. The image forming material is, for example, a toner or an ink. A color of the image forming material includes, for example, cyan (C), magenta (M), yellow (Y), and black (K) as basic colors. The color of the image forming material includes silver, gold, clear, and white as spot colors.

In the following description, brilliance colors such as silver and gold are referred to as metallic. Further, a printed matter containing metallic (for example, printed matter created by using metallic toner, ink, or the like) is referred to as a metallic printed matter. In the following description, a toner for the basic color is referred to as "basic toner", and a toner for the spot color is referred to as "special toner". There is no limitation on the type or color of the image forming material used for the printed matter.

An initial screen of a preview means a screen that appears on a display unit in the preview of the printed matter without setting of an angle of the printed matter and a position of a viewpoint by a user. An initial angle of the printed matter or an initial value of the printed matter angle represents a printed matter angle of a preview image on the initial screen of the preview. An initial position of the viewpoint or an initial value of the viewpoint position (or viewpoint coordinate) represents a viewpoint position of the preview image on the initial screen of the preview.

In the following description, an object located at the viewpoint may be referred to as a camera, or the viewpoint itself may be referred to as a camera. Further, a person located at the viewpoint is also referred to as an observer. A light source may be referred to as illumination, and light of the light source may be referred to as illumination light.

An image representing an observation environment of the printed matter (referred to as environment image) is an image representing an environment in which the printed matter is observed. Environment image data is data representing the environment image input to the image processing system or generated in the image processing system. The environment image data may be, for example, data in which each pixel of the environment image data is represented by the pixel value such as RGB. The environment image data may include information on environment light (for example, brightness information). A format of the environment image data is not limited. A position or region with the highest brightness in the environment image may be specified as a dominant illumination position.

The environment image may be, for example, a spherical image. The spherical image is an image representing a 360-degree omnidirectional scenery. The spherical image may be, for example, an image captured by a spherical camera capable of performing 360-degree omnidirectional capturing at one time. The image captured by the spherical camera contains the information on environment light. In a case where the spherical image is used as the environment image in the preview of the printed matter, the position of the printed matter is provided, for example, as a center point of the spherical image.

The printed matter is an object to be observed. The printed matter may be, for example, a sample for checking the tint and the like. The printed matter may be referred to as a document.

As described below, the image processing system causes the display unit to display, on the initial screen of the preview, an image of the printed matter in which light of the light source reflected by the printed matter (referred to as reflected light) appears at a maximum brightness or a brightness around the maximum brightness. The image of the printed matter in which the reflected light of the printed matter appears at the maximum brightness is an image of the printed matter visually recognized from the viewpoint under an observation condition (referred to as ideal condition) in which the reflected light is incident on the viewpoint at the maximum brightness, in a case where observation conditions including a positional relationship between the light source, the printed matter, and the viewpoint are changed.

For example, in a case where the reflected light incident on the viewpoint is compared under a plurality of observation conditions, an observation condition in which the reflected light at the center of the printed matter has the maximum brightness is the ideal condition. Further, for example, regarding the preview of the metallic printed matter, in a case where the reflected light incident on the viewpoint is compared under a plurality of observation conditions, an observation condition in which the reflected light of a metallic portion has the maximum brightness may be the ideal condition. The metallic portion is a portion of the printed matter having a metallic color, and is, for example, a portion of the printed matter to which the metallic toner or ink adheres. Further, for example, in a case where the reflected light incident on the viewpoint is compared under a plurality of observation conditions, an observation condition in which an average brightness of the reflected light of the entire printed matter is the maximum brightness may be the ideal condition.

The brightness around the maximum brightness means a brightness within a predetermined range above and below the maximum brightness. As an example, the brightness around the maximum brightness may be a brightness within a range of plus or minus 10% of the maximum brightness.

The display unit is, for example, a display as a display device. The display unit may be, for example, a liquid crystal display and an organic electro luminescence (EL) display.

<Outline>

For example, in a case where an actual material of the metallic printed matter is observed, the observer unknowingly inclines, in the observation environment, the printed matter from an angle of the printed matter at which the illumination light is reflected by the printed matter and reaches the observer's eyes with strong light (for example, maximum brightness) to observe glossy feeling of the printed matter by a difference in the light that reaches the eyes. Accordingly, for example, in a case where the metallic printed matter is previewed, the positions of the light source, the printed matter, and the viewpoint are recommended to be set such that the illumination light reflected by the printed matter enters the viewpoint with the maximum brightness or the brightness around the maximum brightness.

However, in the preview of the printed matter, there are many combinations of the positions of the light source, the printed matter, and the viewpoint, and thus the positions of the light source, the printed matter, and the viewpoint may be difficult to be set, by the user, such that the light (illumination light) of the light source reflected by the printed matter enters the viewpoint with the maximum brightness or the brightness around the maximum brightness. The environment image (also referred to as environment map or background image) may be used in the preview of the printed matter, and a position of an observation light source changes depending on a type of the environment image. In such a preview environment in which the position of the light source changes, the printed matter angle and the viewpoint position need to be set in accordance with the position of the light source. Thus, a required printed matter image is difficult to be displayed. The above will be described after the preview in a case where the environment image is not used (single light source) is described.

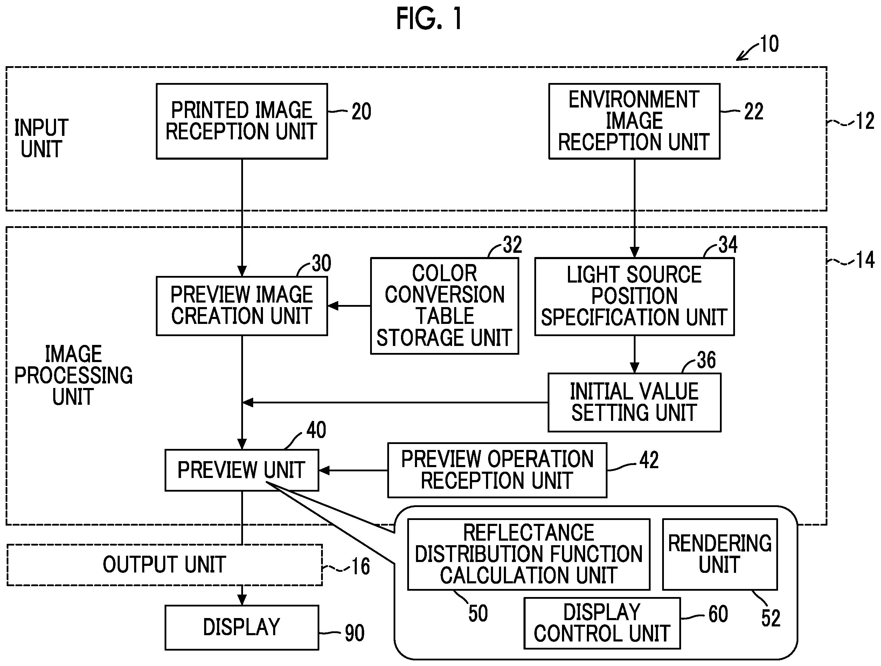

The image processing system is configured to support both the case where the environment image is not used (case of single light source) and the case where the environment image is used, for example. Regarding the configuration of the image processing system, in a case where the environment image is not used (case of single light source), an environment image reception unit 22, a light source position specification unit 34, and an initial value setting unit 36 in Fig. 1 (functional block diagram) described below are omitted.

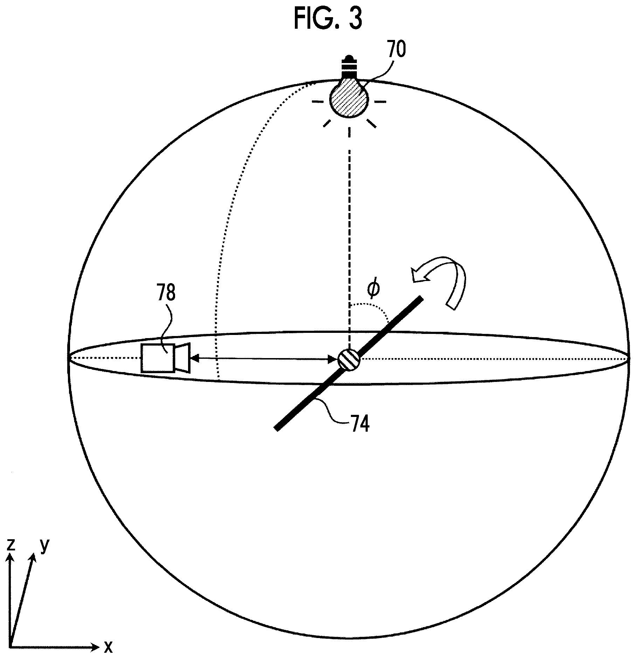

Fig. 3 is a diagram showing an example of a positional relationship between a light source 70, a printed matter 74, and a camera 78 (viewpoint) in a case where the environment image is not used in the preview of the printed matter. In a case where the environment image is not used, a position of the light source 70 can be set in advance, and thus an initial position of the camera 78 and an initial angle of the printed matter 74 can be fixed in advance in accordance with the position of the light source 70.

As shown in Fig. 3, the printed matter 74 is disposed at the origin, and the center of the printed matter 74 is located at the origin. In a case where the light source 70 is disposed on a perpendicular line of the origin, the camera 78 is disposed on a horizontal line of the origin, and an angle Φ of the printed matter 74 with respect to the perpendicular line of the origin is 45 degrees, the light of the light source 70 reflected at the center of the printed matter 74 is incident on the camera 78 in a brightest state (normally reflected light is incident). In this case, the light source 70, the center of the printed matter 74, and the camera 78 are located on an identical XZ plane. The initial angle of the printed matter 74 is 45°. For the initial position of the camera 78, the coordinates in Y and Z directions are 0 and the coordinates in an X direction are predetermined values.

The image processing system displays an image captured by the camera on the initial screen of the preview (refer to the part (A) in Fig. 10) in the positional relationship between the light source, the printed matter, and the camera. The user can ideally observe the printed matter by inclining the printed matter 74 toward the front or the back with the origin (position of circled mark with hatch in Fig. 3) as an axis from the state (refer to the parts (B) and (C) in Fig. 10). In particular, in a case where the printed matter is the metallic printed matter, metallic brilliance is ideally observed.

Parts (A), (B), and (C) in Fig. 10 are diagrams showing examples of the preview image of the metallic printed matter, where the part (A) in Fig. 10 shows an example of an image on the initial screen of the preview, the part (B) in Fig. 10 shows an example of an image in a state in which the printed matter is inclined toward the front, and the part (C) in Fig. 10 shows an example of an image in a state in which the printed matter is inclined toward the back. In the part (A) in Fig. 10 (initial screen of the preview), a central portion of the printed matter in a vertical direction is the brightest. In the part (B) in Fig. 10 (state in which the printed matter is inclined toward the front), the vicinity of the center of the printed matter becomes dark and an upper portion becomes bright. In the part (C) in Fig. 10 (state in which the printed matter is inclined toward the back), the vicinity of the center of the printed matter becomes dark and a lower portion becomes bright.

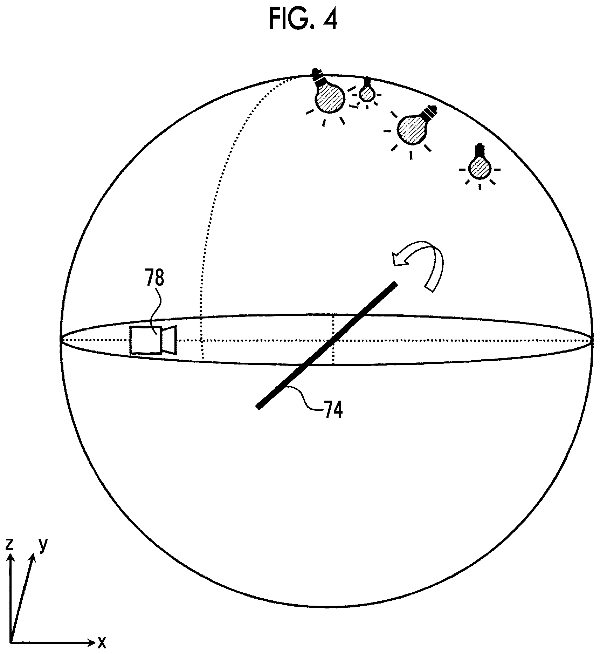

Figs. 4 to 6 are diagrams for describing the positional relationship between the light source 70, the printed matter 74, and the camera 78 (viewpoint) in a case where the environment image is used in the preview of the printed matter. The environment image is, for example, the spherical image. In a case where the environment image is used, the position of the light source changes depending on the type of the environmental image. Accordingly, as shown in Fig. 4, in a case where the initial position of the camera 78 and the initial angle of the printed matter 74 are the same position and angle as in the case where the environment image is not used (case of single light source), the user cannot appropriately observe the metallic brilliance of the printed matter (for example, metallic printed matter) only by inclining the printed matter 74.

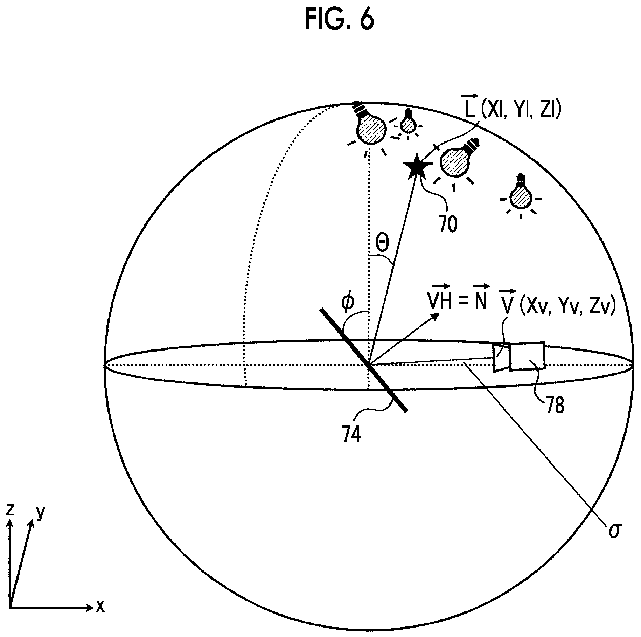

As shown in Fig. 6, the image processing system specifies the position of the light source 70 based on the environment image in a case where the environment image is used. For example, the image processing system specifies the position with the highest brightness in the environment image as the position of the light source 70. The image processing system sets the initial position of the camera 78 and the initial angle of the printed matter 74 such that a half vector VH of a light source vector L and a line-of-sight vector V (also referred to as viewpoint vector) matches or approaches a dominant normal vector N of the printed matter 74. That is, in the image processing system, the angle of the printed matter 74 and the position of the camera 78 in which the light of the light source 70 reflected by the printed matter 74 is incident on the camera 78 with the maximum brightness or the brightness around the maximum brightness are respectively set as the initial angle of the printed matter 74 and the initial position of the camera 78.

The image processing system generates the preview image of the printed matter 74 based on the specified position of the light source 70, the initial position of the camera 78, and the initial angle of the printed matter 74. The image processing system displays the preview image on the initial screen of the preview. Accordingly, the user may appropriately observe the texture of the printed matter 74 (for example, metallic brilliance).

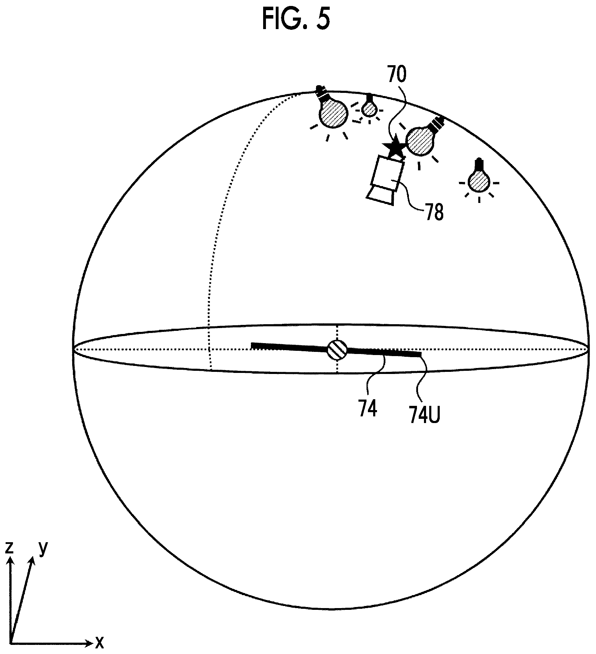

In this method, as shown in Fig. 5, the initial angle of the printed matter 74 and the initial position of the camera 78 (observer) may be an initial angle thereof and an initial position thereof, which are unlikely in an actual environment. For example, as shown in Fig. 5, an upper end 74U of the printed matter 74 is in a negative direction from the horizontal line at the initial angle of the printed matter 74, or the upper end 74U of the printed matter 74 is further in the negative direction in a case where the printed matter 74 is inclined toward the back. The image processing system sets initial values of the position and the angle (initial position of the camera and initial angle of the printed matter) in consideration of the angle of the printed matter 74 and the position of the camera 78 (observer) assumed in an actual environment.

Specifically, the image processing system may set the initial values of the camera position and the printed matter angle in consideration of the following conditions (A) to (D).

Condition (A): The viewpoint does not have a positional relationship of looking up at the printed matter.

Condition (B): In a case where the printed matter is inclined within a predetermined angle range (plus or minus 45 degrees as an example) from the initial angle of the printed matter, the upper end of the printed matter does not fall toward the front side with respect to the viewpoint and the lower end of the printed matter does not lift above the viewpoint.

Condition (C): The angle at which the printed matter is inclined is, at the maximum, plus or minus 45 degrees with respect to the initial angle of the printed matter.

Condition (D): In a case where the light source is low (for example, case where the light source is not directly above), the light source and the viewpoint are located on the same side with respect to the printed matter.

From the above, the image processing system performs processing as follows in the preview of the printed matter using the environment image.

(1) Specifying the position of the light source in the environment image.
(2) Determining, from the light source position specified in (1), the initial values of the camera position and the printed matter angle.
(3) Generating the preview image based on the initial values of the camera position and the printed matter angle.
(4) Displaying the preview image generated in (3) on the initial screen of the preview.

In (2) described above, in the image processing system, the initial values of the camera position and the printed matter angle are determined such that the half vector VH of the light source vector L and the line-of-sight vector V matches or approaches the dominant normal vector N of the printed matter 74. In this case, the image processing system considers the above conditions (A) to (D) as necessary.

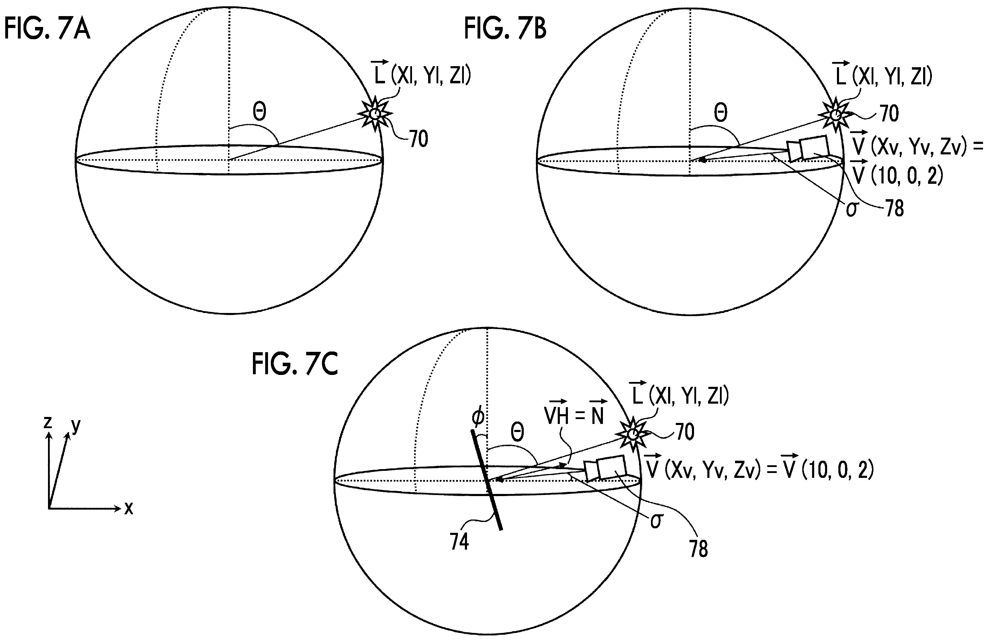

In the examples (Figs. 7A to 9C) described below, the processing is performed as follows.

The printed matter is disposed at the origin, and the center of the printed matter is located at the origin. The light source is specified from the environment image. The initial position of the viewpoint and the initial angle of the printed matter are set such that the light (normally reflected light) of the light source that is normally reflected at the center of the printed matter is incident on the viewpoint (camera). The initial position of the viewpoint and the initial angle of the printed matter may be set such that the reflected light close to the normally reflected light is incident on the viewpoint. On the preview initial screen, the image of the printed matter in which the normally reflected light appears at the center of the printed matter is displayed (refer to the part (A) in Fig. 10). For example, the user performs an operation of inclining the printed matter displayed on the preview initial screen with the center in the vertical direction of the printed matter as an axis to observe a virtual printed matter (refer to the parts (B) and (C) in Fig. 10).

As described above, in a case where the environment image is not used (case of single light source), the initial position of the viewpoint and the initial angle of the printed matter can be fixed in advance.

Hereinafter, a specific exemplary embodiment of the image processing system in a case where the environment image is used in the preview of the printed matter will be described.

<Image Processing System>

Fig. 1 is a functional block diagram of an image processing system 10 according to an exemplary embodiment. The image processing system 10 causes a display 90 to display the preview image for checking a finished state of the printed matter before the creation of the printed matter. The display 90 as the display unit is electrically connected to the image processing system 10. The printed matter assumed in the exemplary embodiment is created by using a toner by an electrophotographic printing device.

As shown in Fig. 1, the image processing system 10 includes an input unit 12, an image processing unit 14, and an output unit 16 as functional elements.

The input unit 12 includes a printed image reception unit 20 and the environment image reception unit 22. The printed image reception unit 20 receives the printed image data. Specifically, the printed image reception unit 20 receives the pixel value of a total of five colors of the basic color and the spot color (CMYK and spot color) in each pixel of the printed image data. In the exemplary embodiment, the spot color is one color, but there may be two or more spot colors. The pixel value of each pixel of the printed image data is, for example, a value of 0 to 255. Further, the pixel value of each pixel of the printed image data may be the density value of the toner (0 to 100%).

The environment image reception unit 22 receives the environment image data. The environment image represented by the environment image data is the spherical image. The environment image reception unit 22 receives the pixel value such as RGB in each pixel of the environment image data.

The image processing unit 14 includes a preview image creation unit 30, a color conversion table storage unit 32, the light source position specification unit 34, the initial value setting unit 36, a preview unit 40, and a preview operation reception unit 42.

A plurality of color conversion tables are stored in the color conversion table storage unit 32. Fig. 11A shows an example of a color conversion table 33. In the color conversion table 33, the pixel value of the CMYK and spot color is associated with an RGB gloss value. The color conversion table 33 is prepared for each printing condition such as the recording medium and the type of toner. The preview image creation unit 30 converts the pixel value (CMYK and spot color) of the printed image data to the RGB gloss value for each pixel of the printed image data, using a color conversion table in the color conversion table storage unit 32 that corresponds to the printing condition of the printed matter, to create RGB gloss data. The preview image creation unit 30 outputs the RGB gloss data to the preview unit 40.

The light source position specification unit 34 acquires the environment image data to specify the position of the light source based on the brightness information (brightness information of the environment image) of the environment image data. Specifically, the light source position specification unit 34 specifies the position with the highest brightness in the environment image as the position of the light source.

The initial value setting unit 36 determines the initial value of the camera position and the initial value of the printed matter angle based on the light source position specified by the light source position specification unit 34. The initial value of the camera position and the initial value of the printed matter angle are respectively the camera position and the angle of the printed matter of the preview image on the initial screen of the preview. The initial value setting unit 36 outputs the initial value of the camera position and the initial value of the printed matter angle to the preview unit 40. The light source position specified by the light source position specification unit 34 is also output to the preview unit 40.

The preview unit 40 includes a reflectance distribution function calculation unit 50, a rendering unit 52, and a display control unit 60.

The reflectance distribution function calculation unit 50 calculates a reflectance distribution function for each pixel based on the RGB gloss data obtained from the preview image creation unit 30.

The rendering unit 52 disposes a three-dimensional model of the printed matter corresponding to the printed image data on a virtual screen in a virtual three-dimensional space and determines the RGB value of each pixel configuring a surface of the three-dimensional model. Specifically, the rendering unit 52 determines the RGB value of each pixel configuring the surface of the three-dimensional model of the printed matter based on the reflectance distribution function calculated by the reflectance distribution function calculation unit 50, the light source position specified by the light source position specification unit 34, and the initial value of the printed matter angle and the initial value of the camera position set by the initial value setting unit 36.

The display control unit 60 causes the display 90 to display a three-dimensional computer graphic (CG) image including the three-dimensional model of the printed matter, which is obtained from the rendering unit 52, via the output unit 16 as the preview image. The preview operation reception unit 42 receives, from a user, an operation (for example, operation of inclining printed matter) on the three-dimensional model of the printed matter in the virtual three-dimensional space. The display control unit 60 causes the display 90 to display the three-dimensional CG image that reflects the user operation received by the preview operation reception unit 42.

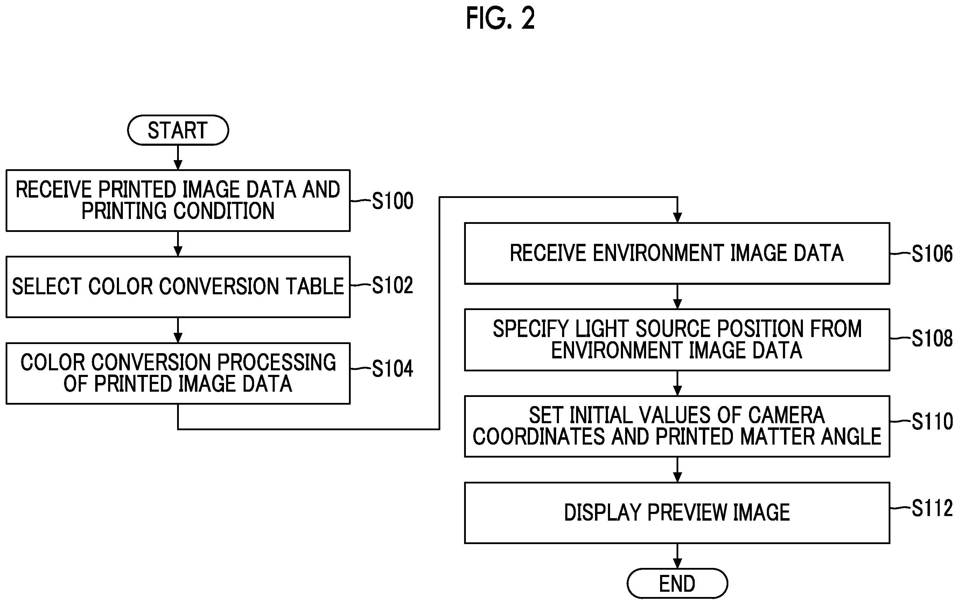

Fig. 2 is a flowchart showing processing performed by the image processing system. In S100, the image processing system receives the printed image data of the printed matter and the printing condition. In S102, the image processing system selects the color conversion table based on the printing condition received in S100. In S104, the image processing system converts the printed image data (pixel value of the CMYK and spot color) to the RGB gloss data by using the color conversion table selected in S102. In S106, the image processing system receives the environment image data. In S108, the image processing system specifies the light source position based on the environment image data. In S110, the image processing system sets the initial value of the camera position and the initial value of the printed matter angle based on the light source position specified in S108. In S112, the image processing system displays the preview image of the printed matter based on the RGB gloss data (acquired in S104), the light source position (acquired in S108), the initial value of the printed matter angle (acquired in S110), and the initial value of the camera position (acquired in S110).

Next, conditions used in a case where the initial value setting unit 36 determines the initial values of the printed matter angle and the camera position will be described with reference to Fig. 6.

First, reference numerals will be described.

VH represents a half vector of the light source vector L and the line-of-sight vector V.

N represents a dominant normal vector of the printed matter.

$\Phi$ represents the angle of the printed matter 74 with respect to the perpendicular line passing through the origin.

$\Theta$ represents the angle of the light source 70 (illumination) with respect to the perpendicular line passing through the origin.

$\sigma$ represents the angle of the camera (viewpoint) with respect to the horizontal line passing through the origin.

Xv, Yv, and Zv represent components (coordinates) of the line-of-sight vector V in the X, Y, and Z directions, respectively.

Xl, Yl, and Zl represent components (coordinates) of the light source vector L in the X, Y, and Z directions, respectively.

The initial value setting unit 36 determines the initial values of the printed matter angle and the camera position (the initial angle of the printed matter 74 and the initial position of the camera 78) such that the half vector VH of the light source vector L and the line-of-sight vector V matches the dominant normal vector N of the printed matter 74. Further, the initial value setting unit 36 determines the initial values of the printed matter angle and the camera position in consideration of the above conditions (A) to (D).

Specifically, the initial value setting unit 36 determines the initial values of the printed matter angle and the camera position that satisfy the following conditions (a) to (e).

Condition (a):

$$VH = N$$

Condition (b): The light source vector L and the line-of-sight vector V are located on an identical plane. For example, assuming $Yl = Yv = 0$, the light source vector L and the line-of-sight vector V are located on the XZ plane (example of Fig. 6). However, in a case where $Xl = 0$ and $Yl = 0$, predetermined Xv and Yv are used.

Condition (c):

$$Zv \geq 0$$

Condition (d): Zv where $\Phi \leq 45°$.

Condition (e):

$$\Phi = 45° - 1/2 * (\Theta + \sigma) + \sigma$$

In a case where $Zv = 0$, $\Phi = 45° - 1/2 * \Theta$.

<Example 1>

Next, specific examples will be described. Figs. 7A, 7B, and 7C are explanatory diagrams of Example 1. As shown in Fig. 7A, the light source position specification unit 34 specifies the position (coordinates) of the light source 70 based on the spherical image which is the environmental image. Specifically, the light source position specification unit 34 specifies the position with the highest brightness in the spherical image as the position of the light source 70. Fig. 7A shows an example in which the coordinates of the light source 70 are specified as follows.

(a1) Coordinates of observation light source:

$$Xl > 0, Yl = 0, Zl > 0$$

(a2) Angle of observation light source with respect to perpendicular line of origin: $\Theta = 60°$

Next, the initial value setting unit 36 determines the initial position (initial coordinates) of the camera 78 as shown in Fig. 7B.

(b1) Since $Xl > 0$ and $Yl = 0$, the initial coordinates of the camera 78 are set to $Xv > 0$ and $Yv = 0$. In this example, $Xv = 10$.
(b2) Conditions for Zv are $Zv \geq 0$ and $\sigma \leq 30°$. This is because since $\Theta = 60°$, $\sigma \leq 30°$ is satisfied on the assumption that the camera 78 is below the light source 70. Further, in a case where $\sigma$ is larger than 30°, the upper end of the printed matter may be negative from the horizontal line when the printed matter is inclined 45° toward the back from the initial angle. Therefore, $\sigma \leq 30°$.
(b3) Zv is selected in a range of 0 to 5.7. Note that 5.7 is a value obtained from $Xv \times \tan(\text{maximum } \sigma) = 10 \times \tan(30°) =$ about 5.7. Here, $Zv = 2.0$. From $Xv = 10$ and $Zv = 2.0$, $\sigma = \arctan(2/10) = 11.3°$.

Next, the initial value setting unit 36 determines the initial angle $\Phi$ of the printed matter 74 as shown in Fig. 7C.
(c1) The initial value setting unit 36 determines the angle $\Phi$ at which the dominant normal vector N of the printed matter 74 = VH.

$$\Phi = 45° - 1/2 * (\Theta + \sigma) + \sigma$$

$$= 45° - 1/2 * (60° + 11.3°) + 11.3° = 20.65°$$

Next, the preview unit 40 displays the image of the printed matter 74 on the initial screen of the preview based on the position of the light source 70, the initial position of the camera 78 (initial coordinates (Xv,Yv,Zv)), and the initial angle $\Phi$ of the printed matter 74. In Example 1 described above, the initial position of the camera 78 and the initial angle of the printed matter 74 in which the brightness of the reflected light of the printed matter 74 incident on the camera 78 is the maximum brightness are determined. However, for example, the initial position of the camera 78 and the initial angle of the printed matter 74 in which the brightness of the reflected light of the printed matter 74 incident on the camera 78 is within a range of plus or minus 10% of the maximum brightness. The above also applies to other examples described below.

<Example 2>

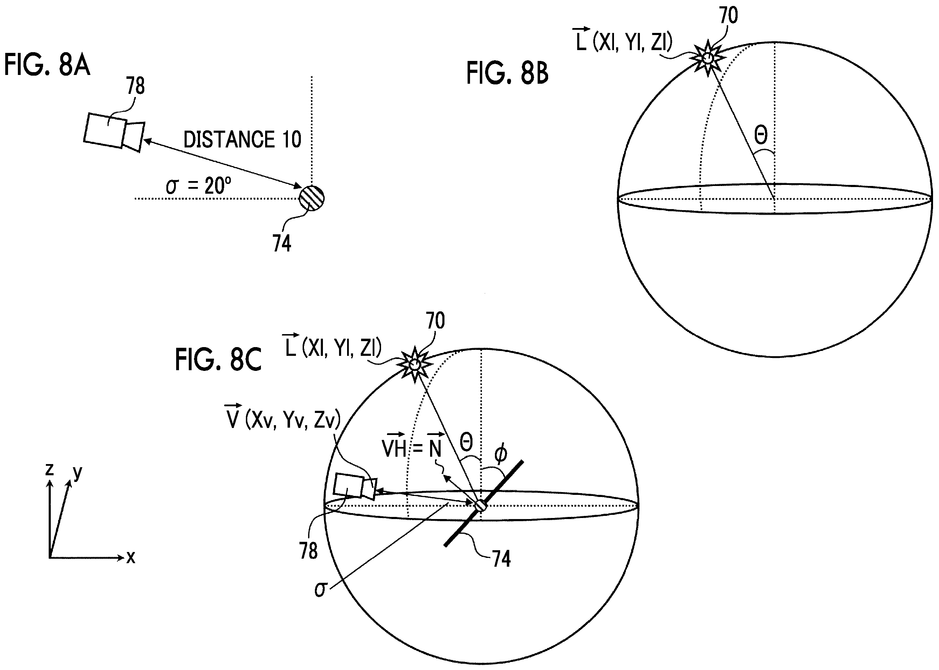

Figs. 8A, 8B, and 8C are explanatory diagrams of Example 2. As shown in Fig. 8A, Example 2 is an example in a case where the user fixes the angle and a distance of the camera 78 with respect to the printed matter 74 (origin). In Example 2, the angle $\sigma$ of the camera 78 with respect to the origin is fixed at 20°, and the distance of the camera 78 to the origin is fixed at 10.

As shown in Fig. 8B, the light source position specification unit 34 specifies the position (coordinates) of the light source 70 based on the spherical image which is the environment image. Specifically, the light source position specification unit 34 specifies the position with the highest brightness in the spherical image as the position of the light source 70. In Fig. 8B shows an example in which the coordinates of the light source 70 are specified as follows.

(a1) Coordinates of observation light source:

$$Xl < 0, Yl = 0, Zl > 0$$

(a2) Angle of observation light source with respect to perpendicular line of origin: $\Theta = 30°$

Next, the initial value setting unit 36 determines the initial position (initial coordinates) of the camera 78 as shown in Fig. 8C.

(b1) Since $Xl < 0$ and $Yl = 0$, $Xv < 0$ and $Yv = 0$ are set.
(b2) Since the distance to the origin of 10 and $\sigma = 20°$ are determined, $Xv = -9.4$ and $Zv = 3.4$. Note that -9.4 is a value obtained from $Xv = -1 \times 10 \times \cos(20°) =$ about -9.4. Further, 3.4 is a value obtained from $Zv = 10 \times \sin(20°) =$ about 3.4.

Next, the initial value setting unit 36 determines the initial angle $\Phi$ of the printed matter 74 as shown in Fig. 8C.
(c1) Since $\sigma = 20°$ is fixed, $\Phi$ is determined from the following.

$$\Phi = 45° - 1/2 * (\Theta + \sigma) + \sigma$$

$$= 45° - 1/2 * (30° + 20°) + 20° = 40°$$

Next, the preview unit 40 displays the image of the printed matter 74 on the initial screen of the preview based on the position of the light source 70, the initial position of the camera 78 (initial coordinates (Xv,Yv,Zv)), and the initial angle $\Phi$ of the printed matter 74.

<Example 3>

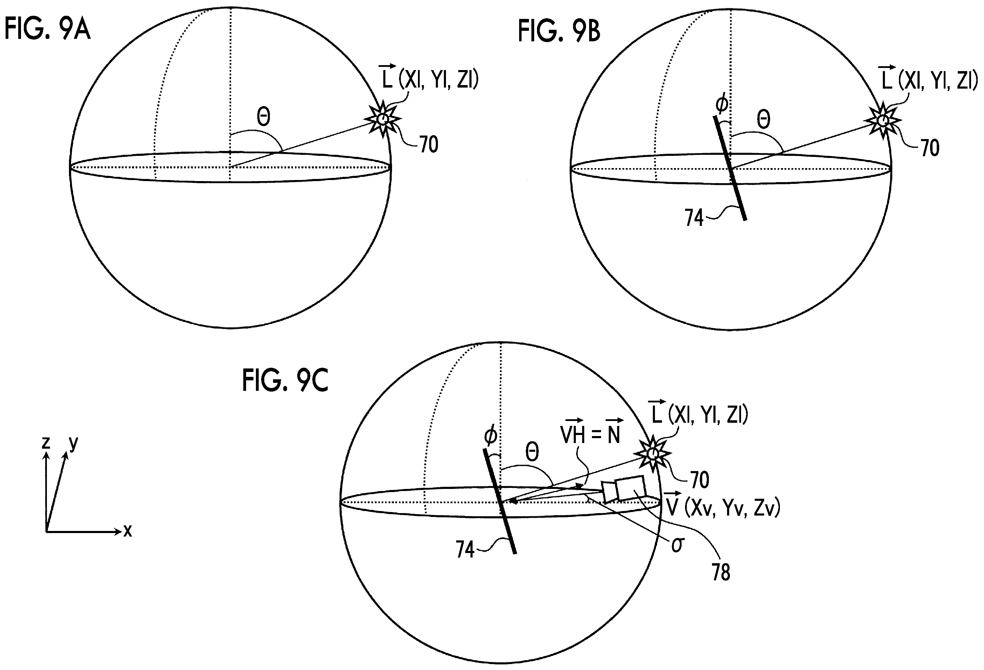

Figs. 9A, 9B, and 9C are explanatory diagras of Example 3. In Example 3, the initial angle $\Phi$ of the printed matter 74 is determined and then the initial position of the camera 78 is determined.
As shown in Fig. 9A, the light source position specification unit 34 specifies the position (coordinates) of the light source 70 based on the spherical image which is the environmental image. Specifically, the light source position specification unit 34 specifies the position with the highest brightness in the spherical image as the position of the light source 70. In Fig. 9A shows an example in which the coordinates of the light source 70 are specified as follows.

(a1) Coordinates of observation light source:

$$Xl > 0, \ Yl = 0, \ Zl > 0$$

(a2) Angle of observation light source with respect to perpendicular line of origin: $\Theta = 70°$

Next, the initial value setting unit 36 determines the initial angle $\Phi$ of the printed matter 74 as shown in Fig. 8B. The conditions are as follows.

(b1) The surface of the printed matter 74 needs to face the light source 70 side. That is, the dominant normal vector N needs to face the positive direction of the X-axis.
(b2) Prevent the camera 78 from being at a position looking up at the printed matter 74.

From the above (b1) and (b2), $\varphi$ has the following conditions.

$$\Phi \geq (90 - \Theta)/2 = (90 - 70)/2 = 10°$$

(b3) Further, when the printed matter 74 is inclined by plus or minus 45°, the upper end of the printed matter 74 is prevented from becoming minus in the Z-axis direction. Accordingly, $\varphi \leq 45°$.
From the above, $\varphi$ is random from 10° to 45° and is set to 20° here.
Next, the initial value setting unit 36 determines the initial position (initial coordinates) of the camera 78 as shown in Fig. 9C.

(c1) Since $\varphi = 20°$, $\sigma$ is determined from the following.

$$\sigma = 2\varphi - 90 + \Theta$$

$$= 2 * 20 - 90 + 70 = 20°$$

(c2) Since $Xl > 0$ and $Yl = 0$, the initial coordinates of the camera 78 are set to $Xv > 0$ and $Yv = 0$. In this example, $Xv = 10$. Accordingly, $Zv$ becomes the following.

$$Zv = Xv * \tan(\sigma)$$

$$= 10 * \tan(20°) = about \ 3.6.$$

Next, the preview unit 40 displays the image of the printed matter 74 on the initial screen of the preview based on the position of the light source 70, the initial position of the camera 78 (initial coordinates $(Xv, Yv, Zv)$), and the initial angle $\Phi$ of the printed matter 74.

<Color Conversion Table>

From here, a method of realizing the preview will be described in detail. First, the color conversion table used by the preview image creation unit 30 (refer to Fig. 1) will be described in detail. Fig. 11A is a diagram showing an example of the color conversion table 33. In the color conversion table 33, the pixel value (CMYK and spot color) of the printed image data is associated with the RGB value and the gloss value. The gloss value is represented by three numerical values of $\Delta R \Delta G \Delta B$.
The color conversion table 33 is prepared for each combination of, for example, the recording medium, the image forming material (toner or the like), and the printing method. Therefore, there are a plurality of color conversion tables 33.
The color conversion table 33 is created, for example, as follows. First, a patch chart is prepared in which a plurality of patches having different colors and densities are printed on the recording medium. An image reading apparatus reads the patch chart to acquire each average RGB value of a diffuse reflection image and a mirror-surface reflection image for each patch. The average RGB value of the diffuse reflection image is the RGB value of the color conversion table 33. A difference between the average RGB value of the diffuse reflection image and the average RGB value of the mirror-surface reflection image is calculated to generate a difference image. The RGB value of the difference image is a $\Delta R \Delta G \Delta B$ value of the color conversion table 33. The pixel value (CMYK and spot color) of the patch is associated with the RGB value and the $\Delta R \Delta G \Delta B$ value corresponding to the patch for each patch to generate the color conversion table 33.
Information on the recording medium, the image forming material (toner or the like), the printing method, and the like used for the patch chart is added to the color conversion table 33, and the color conversion table 33 is managed by the color conversion table storage unit 32 (refer to Fig. 1). The details of the method of creating the color conversion table 33 described here are described in, for example, JP2020-52483A.

One color conversion table is selected from the plurality of color conversion tables 33 based on the recording medium, the image forming material (toner or the like), the printing method, and the like used for the creation of the printed matter to be previewed, and color conversion processing is performed by using the selected color conversion table 33 (S104 in Fig. 2).

In the color conversion table 33 (refer to Fig. 11A), the value of 0 to 255 or the value of 0 to 100% (density) may be specified as the pixel value of the CMYK and spot color in the left column. Further, in the color conversion table 33, a value of an L*, a*, and b* system may be specified in the right column, instead the RGB value. Further, the gloss value of one numerical value may be specified, instead of $\Delta R \Delta G \Delta B$. The color conversion table 33 described here is an example, and the color conversion table for realizing the preview display or means instead of the color conversion table is not limited.

<Preview Display>

Next, processing performed by the preview image creation unit 30 (refer to Fig. 1) and the preview unit 40 will be described in detail. The preview image creation unit 30 and the preview unit 40 may be realized, for example, by employing a known technique described in JP2020-52483A. The processing up to the preview display will be described.

The preview image creation unit 30 searches the color conversion table 33 (refer to Fig. 11A) using the CMYK and spot color as a search key for each pixel of the printed image data and reads out the RGB value and the $\Delta R \Delta G \Delta B$ value corresponding to the CMYK and spot color.

In a case where the pixel value (CMYK and spot color) of the printed image data is not recorded in the color conversion table 33, the preview image creation unit 30 may read out the RGB value and the $\Delta R \Delta G \Delta B$ value corresponding to a color similar to the CMYK and spot color of the printed image data. Here, the similar color refers to, for example, a color having a closest distance in a color space and a color within a distance set in advance. Further, the preview image creation unit 30 may read out a plurality of sets of RGB values and $\Delta R \Delta G \Delta B$ values for a plurality of similar colors and calculate estimated values of the RGB values and $\Delta R \Delta G \Delta B$ values from these values.

Accordingly, the RGB gloss data as the two-dimensional data in which each pixel value consists of the RGB value and the $\Delta R \Delta G \Delta B$ value (RGB gloss value) can be obtained.

The reflectance distribution function calculation unit 50 calculates the reflectance distribution function corresponding to the appearance in printing from the pixel value (RGB value and $\Delta R \Delta G \Delta B$ value) of the RGB gloss data for each pixel of the RGB gloss data. For example, the reflectance distribution function calculation unit 50 calculates the reflectance distribution function as the following equation according to a reflection model of Phong.

$$I = Ii \cdot \{wd \cdot RGB \cdot \cos\theta i\} + Ii \cdot \{ws \cdot \Delta R \Delta G \Delta B \cdot \cos^n \gamma\} \ ... \ (1)$$

Here, I is reflected light intensity. $\{wd \cdot RGB \cdot \cos\theta i\}$ of the first term on the right side is a diffuse reflectance distribution function. Here, wd is a diffuse reflection weight coefficient, and RGB is a value read out from the color conversion table 33. $\theta i$ is an incident angle. $\{ws \cdot \Delta R \Delta G \Delta B \cdot \cos^n \gamma\}$ of the second term on the right side is a mirror-surface reflectance distribution function. Here, ws is a mirror-surface reflection weight coefficient, and $\Delta R \Delta G \Delta B$ is a value read out from the color conversion table 33. $\gamma$ is an angle formed by a mirror-surface reflection direction and a line-of-sight direction, and n is a mirror-surface reflection index.

Fig. 11B is a diagram showing a relationship between the incident angle $\theta i$ and the angle $\gamma$ formed by the mirror-surface reflection direction and the line-of-sight direction. Here, a vector N indicates the normal vector. A vector L indicates a light source direction vector (light source vector), and a vector R indicates a reflection vector. Further, the vector V indicates a line-of-sight direction vector (line-of-sight vector). Here, the vector R corresponds to the mirror-surface reflection direction, and the vector V corresponds to the line-of-sight direction.

The rendering unit 52 generates the CG image. In other words, the rendering unit 52 disposes the three-dimensional model of the printed matter corresponding to the printed image data on the virtual screen in the virtual three-dimensional space and determines the RGB value of each pixel configuring the surface of the three-dimensional model. Specifically, the rendering unit 52 determines the RGB value of each pixel configuring the surface of the three-dimensional model of the printed matter based on the reflectance distribution function calculated by the reflectance distribution function calculation unit 50, the light source position specified by the light source position specification unit 34, and the initial value of the printed matter angle and the initial value of the camera position set by the initial value setting unit 36. The rendering processing is known and may be executed by using, for example, a radiosity method or a ray tracing method taking into consideration inter-reflection.

The display control unit 60 causes the display 90 as the display unit to perform the preview display of an image of the three-dimensional model generated by rendering. The three-dimensional model is a simulation image of the printed matter corresponding to the printed image data. The preview operation reception unit 42 receives, from a user, an operation (for example, operation of inclining printed matter) on the three-dimensional model of the printed matter in the virtual three-dimensional space. The display control unit 60 causes the display 90 to display the three-dimensional CG image that reflects the user operation received by the preview operation reception unit 42.

The preview display technique described here is an example. Techniques of reproducing texture (glossy feeling, unevenness feeling, or the like) of an object surface by a three-dimensional CG are known, and a part or all of the techniques may be employed as appropriate in the present exemplary embodiment. A technique related to bidirectional reflectance distribution function (BRDF) may be employed.

In Examples 1 to 3 described above, the initial position of the viewpoint and the initial angle of the printed matter are set such that the normally reflected light appears at the center of the printed matter. Accordingly, in the image of the printed matter displayed on the preview initial screen, the line-of-sight vector V matches the reflection vector R in the mirror-surface reflection direction (refer to Fig. 11B) at the center of the printed matter (angle $\gamma$ formed by the line-of-sight vector V and the reflection vector R becomes 0). The parts (A), (B), and (C) in Fig. 10 are diagrams showing examples of the preview image of the metallic printed matter, and the part (A) in Fig. 10 shows an example of the image on the initial screen of the preview.

For example, the user performs an operation of inclining the printed matter displayed on the preview initial screen with the center in the vertical direction of the printed matter as an axis. As shown in the part (B) in Fig. 10, in a case where the printed matter is inclined such that the upper end of the printed matter comes to the front, the normally reflected light or light near the normally reflected light appears at the upper portion of the printed matter, and thus the central portion becomes dark. On the other hand, as shown in the part (C) in Fig. 10, in a case where the printed matter is inclined such that the upper end of the printed matter goes to the back, the normally reflected light or light near the normally reflected light appears at the lower portion of the printed matter, and thus the central portion becomes dark.

According to the exemplary embodiment described above, on the initial screen of the preview, the user can view the image of the printed matter in which the light of the light source reflected at the center of the printed matter appears at the maximum brightness or the brightness around the maximum brightness. Accordingly, the user may check the texture such as glossy feeling near the center of the printed matter. As shown in the part (A) in Fig. 10, in a case where the printed matter is relatively small, the texture of the entire or substantially entire printed matter can be checked on the initial screen of the preview. The user can check the texture of the upper portion or the lower portion of the printed matter by inclining the printed matter on the initial screen of the preview to the front or the back, as shown in the parts (B) and (C) in Fig. 10. With the inclining of the printed matter in this manner, the reflected light of each portion of the printed matter changes. Therefore, the overall texture including the center of the printed matter can be checked.

In the exemplary embodiment described above, the image processing system causes the display unit to display the image of the printed matter in which the light of the light source reflected at the center of the printed matter appears at the maximum brightness or the brightness around the maximum brightness on the initial screen of the preview. However, in another exemplary embodiment, the image processing system may cause the display unit to display the image of the printed matter in which the light of the light source reflected by the metallic portion of the printed matter appears at the maximum brightness or the brightness around the maximum brightness on the initial screen of the preview. The above exemplary embodiment is effective for, for example, a printed matter having a metallic portion in a portion other than the center of paper (for example, upper portion or lower portion).

Further, in the exemplary embodiment described above, the printed matter is the metallic printed matter, but the printed matter may be a printed matter other than the metallic printed matter (for example, printed matter using only basic toner).

<Configuration of Image Processing System>

The image processing system of the above exemplary embodiment is configured by using, for example, a general-purpose computer.

The image processing system may be constructed as, for example, a single computer or a system consisting of a plurality of computers that cooperate with each other. As shown as an example in Fig. 12, for example, a computer, which is the base of the image processing system 10, has a circuit configuration in which a processor 1002, a memory (main storage device) 1004 such as a random access memory (RAM), a controller that controls an auxiliary storage device 1006 that is a non-volatile storage device such as a flash memory, a solid state drive (SSD), or a hard disk (HDD), an interface with various input and output devices 1008, a network interface 1010 that performs control for connection with a network, and the like are connected via a data transmission path such as a bus 1012. A program describing the content of the processing is installed in the computer through the network or the like and stored in the auxiliary storage device 1006. With execution of the program, which is stored in the auxiliary storage device 1006, by the processor 1002 using the memory 1004, the image processing system of the present exemplary embodiment is configured.

The program can be provided via a network such as the Internet and provided being stored in a computer-readable recording medium such as an optical disk or a USB memory.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

According to appended claim 1 or 12, the image of the printed matter in which the light of the light source reflected by the printed matter appears at the maximum brightness or the brightness around the maximum brightness is displayed on the initial screen of the preview.

According to appended claim 2, the image of the printed matter in which the light of the light source reflected at the center of the printed matter appears at the maximum brightness or the brightness around the maximum brightness is displayed on the initial screen of the preview.

According to appended claim 3, the image of the printed matter in which the light of the light source reflected by the metallic portion of the printed matter appears at the maximum brightness or the brightness around the maximum brightness is displayed on the initial screen of the preview.

According to appended claim 4 or 5, the position of the light source according to the observation environment of the printed matter is specified.

According to appended claim 6, the position of the light source according to the spherical image is specified.

According to appended claim 1, the image of the printed matter according to the initial angle of the printed matter and the initial position of the viewpoint is displayed on the initial screen of the preview.

According to appended claim 7, 8, or 10, the initial angle of the printed matter and the initial position of the viewpoint, which are the same as or close to the actual viewing of the printed matter, may be set.

According to appended claim 9, the initial position of the viewpoint, which is the same as or close to the actual viewing of the printed matter may be set.

According to appended claim 11, at least one glossy feeling of metallic or clear is checked in the preview of the printed matter.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

Brief Description of the Reference Symbols

10: image processing system
12: input unit
14: image processing unit
16: output unit
20: printed image reception unit
22: environment image reception unit
30: preview image creation unit
32: color conversion table storage unit
33: color conversion table
34: light source position specification unit
36: initial value setting unit
40: preview unit
42: preview operation reception unit
50: reflectance distribution function calculation unit
52: rendering unit
60: display control unit
70: light source (illumination)
74: printed matter (document)

74U: upper end
78: camera (viewpoint)
90: display
100, 100-1, 100-2: preview image
1002: processor
1004: memory
1006: auxiliary storage device
1008: input and output device
1010: network interface
1012: bus

## Claims

1. An image processing system (10) comprising:
a processor (1002) configured to:
cause a display unit (90) to display an image of a printed matter (74) in which light, which is illuminated by a light source (70) and reflected by the printed matter (74), appears at a maximum brightness or a brightness around the maximum brightness, on an initial screen of a preview; the image processing system (10) being **characterized in that** the processor (1002) is further configured to:

   set, based on a position of the light source (70), an angle of the printed matter (74) and a position of a viewpoint in which the light reflected by the printed matter (74) is incident on the viewpoint at the maximum brightness or the brightness around the maximum brightness as an initial angle of the printed matter (74) and an initial position of the viewpoint, respectively; and
   generate the image of the printed matter (74) on the initial screen of the preview based on the initial angle of the printed matter (74) and the initial position of the viewpoint,
   wherein a center of the printed matter (74) is located at an origin, and the angle of the printed matter (74) is formed between a perpendicular line of the origin and a direction of the printed matter (74).

2. The image processing system (10) according to claim 1, wherein the processor (1002) is configured to:
cause a display unit (90) to display an image of the printed matter (74) in which light, which is illuminated by a light source (70) and reflected at a center of the printed matter (74), appears at a maximum brightness or a brightness around the maximum brightness on the initial screen of the preview.

3. The image processing system (10) according to claim 1, wherein the processor (1002) is configured to:
cause a display unit (90) to display an image of the printed matter (74) in which light, which is illuminated by a light source (70) and reflected by a metallic portion of the printed matter (74), appears at a maximum brightness or a brightness around the maximum brightness on the initial screen of the preview.

4. The image processing system (10) according to any one of claims 1 to 3, wherein the processor (1002) is configured to:

   acquire an image representing an observation environment of the printed matter (74); and
   specify a position of the light source (70) based on brightness information of the image representing the observation environment.

5. The image processing system (10) according to claim 4, wherein the processor (1002) is configured to:
specify a position with a highest brightness in the image representing the observation environment as the position of the light source (70).

6. The image processing system (10) according to claim 4 or 5,
wherein the image representing the observation environment is a spherical image.

7. The image processing system (10) according to claim 1, wherein the processor (1002) is configured to:
set the initial angle of the printed matter (74) and the initial position of the viewpoint such that the viewpoint is not located at the printed matter (74).

8. The image processing system (10) according to claim 1, wherein the processor (1002) is configured to:

in a case where the printed matter (74) is inclined within a range of a predetermined angle from the initial angle of the printed matter (74) on the initial screen of the preview, set the initial angle of the printed matter (74) and the initial position of the viewpoint such that an upper end of the printed matter (74) does not fall toward a front side with respect to the viewpoint and a lower end of the printed matter (74) does not lift above the viewpoint.

9. The image processing system (10) according to claim 1, wherein the processor (1002) is configured to:
set the initial position of the viewpoint such that the light source (70) and the viewpoint are located on the same side with respect to the printed matter (74).

10. The image processing system (10) according to claim 1, wherein the processor (1002) is configured to:
set the initial angle of the printed matter (74) and the initial position of the viewpoint such that a half vector of a vector of the light source (70) and a vector of the viewpoint matches a dominant normal vector of the printed matter (74).

11. The image processing system (10) according to any one of claims 1 to 10,
wherein the printed matter (74) includes at least one of metallic or clear coloring material.

12. An image processing method comprising:

causing a display unit (90) to display an image of a printed matter (74) in which light of a light source (70) reflected by the printed matter (74) appears at a maximum brightness or a brightness around the maximum brightness, on an initial screen of a preview;
the method being **characterized by** further comprising:

setting, based on a position of the light source (70), an angle of the printed matter (74) and a position of a viewpoint in which the light reflected by the printed matter (74) is incident on the viewpoint at the maximum brightness or the brightness around the maximum brightness as an initial angle of the printed matter (74) and an initial position of the viewpoint, respectively; and
generating the image of the printed matter (74) on the initial screen of the preview based on the initial angle of the printed matter (74) and the initial position of the viewpoint,
wherein a center of the printed matter (74) is located at an origin, and the angle of the printed matter (74) is formed between a perpendicular line of the origin and a direction of the printed matter (74).

13. A computer program product comprising instructions which, when the program is executed by a computer, cause the computer to carry out the steps of the method of claim 12.

**Patentansprüche**

1. Bildverarbeitungssystem (10), umfassend:
einen Prozessor (1002), der so konfiguriert ist, dass er:
eine Anzeigeeinheit (90) veranlasst, ein Bild eines gedruckten Materials (74), bei dem Licht, das von einer Lichtquelle (70) beleuchtet wird und von dem gedruckten Material (74) reflektiert wird, auf einem Anfangsbildschirm einer Vorschau mit einer maximalen Helligkeit oder einer Helligkeit um die maximale Helligkeit erscheint, anzuzeigen;
wobei das Bildverarbeitungssystem (10) **dadurch gekennzeichnet ist, dass** der Prozessor (1002) ferner so konfiguriert ist, dass er:

auf der Grundlage einer Position der Lichtquelle (70) einen Winkel des gedruckten Materials (74) und eine Position eines Blickpunkts, bei dem das von dem gedruckten Material (74) reflektierte Licht auf den Blickpunkt mit der maximalen Helligkeit oder der Helligkeit um die maximale Helligkeit einfällt, entsprechend als einen Anfangswinkel des gedruckten Materials (74) und eine Anfangsposition des Blickpunkts einstellt; und
das Bild des gedruckten Materials (74) auf dem Anfangsbildschirm der Vorschau auf der Grundlage des Anfangswinkels des gedruckten Materials (74) und der Anfangsposition des Blickpunkts erzeugt,
wobei sich eine Mitte des gedruckten Materials (74) an einem Ursprung befindet und der Winkel des gedruckten Materials (74) zwischen einer senkrechten Linie des Ursprungs und einer Richtung des gedruckten Materials (74) gebildet ist.

2. Bildverarbeitungssystem (10) nach Anspruch 1, wobei der Prozessor (1002) so konfiguriert ist, dass er:
eine Anzeigeeinheit (90) veranlasst, ein Bild des gedruckten Materials (74), bei dem Licht, das von einer Lichtquelle (70) beleuchtet wird und an einer Mitte des gedruckten Materials (74) reflektiert wird, auf dem Anfangsbildschirm der Vorschau mit einer maximalen Helligkeit oder einer Helligkeit um die maximale Helligkeit erscheint, anzuzeigen.

3. Bildverarbeitungssystem (10) nach Anspruch 1, wobei der Prozessor (1002) so konfiguriert ist, dass er:
eine Anzeigeeinheit (90) veranlasst, ein Bild des gedruckten Materials (74), bei dem Licht, das von einer Lichtquelle (70) beleuchtet wird und von einem Metallabschnitt des gedruckten Materials (74) reflektiert wird, auf dem Anfangsbildschirm der Vorschau mit einer maximalen Helligkeit oder einer Helligkeit um die maximale Helligkeit erscheint, anzuzeigen.

4. Bildverarbeitungssystem (10) nach einem der Ansprüche 1 bis 3, wobei der Prozessor (1002) so konfiguriert ist, dass er:

   ein Bild, das eine Beobachtungsumgebung des gedruckten Materials (74) darstellt, erfasst; und
   eine Position der Lichtquelle (70) auf der Grundlage von Helligkeitsinformationen des Bildes, das die Beobachtungsumgebung darstellt, spezifiziert.

5. Bildverarbeitungssystem (10) nach Anspruch 4, wobei der Prozessor (1002) so konfiguriert ist, dass er:
eine Position mit einer höchsten Helligkeit in dem Bild, das die Beobachtungsumgebung darstellt, als die Position der Lichtquelle (70) spezifiziert.

6. Bildverarbeitungssystem (10) nach Anspruch 4 oder 5,
wobei das Bild, das die Beobachtungsumgebung darstellt, ein kugelförmiges Bild ist.

7. Bildverarbeitungssystem (10) nach Anspruch 1, wobei der Prozessor (1002) so konfiguriert ist, dass er:
den Anfangswinkel des gedruckten Materials (74) und die Anfangsposition des Blickpunkts so einstellt, dass sich der Blickpunkt nicht an dem gedruckten Material (74) befindet.

8. Bildverarbeitungssystem (10) nach Anspruch 1, wobei der Prozessor (1002) so konfiguriert ist, dass er:
in einem Fall, in dem das gedruckte Material (74) innerhalb eines Bereichs eines vorbestimmten Winkels von dem Anfangswinkel des gedruckten Materials (74) auf dem Anfangsbildschirm der Vorschau geneigt ist, den Anfangswinkel des gedruckten Materials (74) und die Anfangsposition des Blickpunkts so einstellt, dass ein oberes Ende des gedruckten Materials (74) in Bezug auf den Blickpunkt nicht zu einer Vorderseite hin fällt und sich ein unteres Ende des gedruckten Materials (74) nicht über den Blickpunkt hebt.

9. Bildverarbeitungssystem (10) nach Anspruch 1, wobei der Prozessor (1002) so konfiguriert ist, dass er:
die Anfangsposition des Blickpunkts so einstellt, dass sich die Lichtquelle (70) und der Blickpunkt in Bezug auf das gedruckte Material (74) auf derselben Seite befinden.

10. Bildverarbeitungssystem (10) nach Anspruch 1, wobei der Prozessor (1002) so konfiguriert ist, dass er:
den Anfangswinkel des gedruckten Materials (74) und die Anfangsposition des Blickpunkts so einstellt, dass ein Halbvektor eines Vektors der Lichtquelle (70) und eines Vektors des Blickpunkts mit einem dominanten Normalenvektor des gedruckten Materials (74) übereinstimmt.

11. Bildverarbeitungssystem (10) nach einem der Ansprüche 1 bis 10,
wobei das gedruckte Material (74) mindestens eines von metallischem und klarem Färbematerial enthält.

12. Bildverarbeitungsverfahren, umfassend:

   Veranlassen einer Anzeigeeinheit (90), ein Bild eines gedruckten Materials (74), bei dem Licht einer Lichtquelle (70), das von dem gedruckten Material (74) reflektiert wird, auf einem Anfangsbildschirm einer Vorschau mit einer maximalen Helligkeit oder einer Helligkeit um die maximale Helligkeit erscheint, anzuzeigen;
   wobei das Verfahren **dadurch gekennzeichnet ist, dass** es ferner umfasst:

   Einstellen, auf der Grundlage einer Position der Lichtquelle (70), eines Winkels des gedruckten Materials (74) und einer Position eines Blickpunkts, bei dem das von dem gedruckten Material (74) reflektierte Licht auf den Blickpunkt mit der maximalen Helligkeit oder der Helligkeit um die maximale Helligkeit einfällt, entsprechend als einen Anfangswinkel des gedruckten Materials (74) und eine Anfangsposition des Blickpunkts; und

Erzeugen des Bildes des gedruckten Materials (74) auf dem Anfangsbildschirm der Vorschau auf der Grundlage des Anfangswinkels des gedruckten Materials (74) und der Anfangsposition des Blickpunkts, wobei sich eine Mitte des gedruckten Materials (74) an einem Ursprung befindet und der Winkel des gedruckten Materials (74) zwischen einer senkrechten Linie des Ursprungs und einer Richtung des gedruckten Materials (74) gebildet ist.

13. Computerprogrammprodukt, das Anweisungen umfasst, die, wenn das Programm von einem Computer ausgeführt wird, den Computer veranlassen, die Schritte des Verfahrens von Anspruch 12 durchzuführen.

**Revendications**

1. Système de traitement d'images (10) comprenant :
un processeur (1002) configuré pour :
amener une unité d'affichage (90) à afficher une image d'une matière imprimée (74) dans laquelle la lumière, qui est illuminée par une source de lumière (70) et réfléchie par la matière imprimée (74), apparaît à une luminosité maximale ou à une luminosité autour de la luminosité maximale, sur un écran initial d'un aperçu ; le système de traitement d'images (10) étant **caractérisé en ce que** le processeur (1002) est en outre configuré pour :

définir, sur la base d'une position de la source de lumière (70), un angle de la matière imprimée (74) et une position d'un point de vue dans lequel la lumière réfléchie par la matière imprimée (74) est incidente sur le point de vue à la luminosité maximale ou à la luminosité autour de la luminosité maximale comme un angle initial de la matière imprimée (74) et une position initiale du point de vue, respectivement ; et
générer l'image de la matière imprimée (74) sur l'écran initial de l'aperçu sur la base de l'angle initial de la matière imprimée (74) et de la position initiale du point de vue, dans lequel un centre de la matière imprimée (74) est situé à une origine, et l'angle de la matière imprimée (74) est formé entre une ligne perpendiculaire de l'origine et une direction de la matière imprimée (74).

2. Système de traitement d'images (10) selon la revendication 1, dans lequel le processeur (1002) est configuré pour :
amener une unité d'affichage (90) à afficher une image de la matière imprimée (74) dans laquelle la lumière, qui est illuminée par une source de lumière (70) et réfléchie à un centre de la matière imprimée (74), apparaît à une luminosité maximale ou à une luminosité autour de la luminosité maximale sur l'écran initial de l'aperçu.

3. Système de traitement d'images (10) selon la revendication 1, dans lequel le processeur (1002) est configuré pour :
amener une unité d'affichage (90) à afficher une image de la matière imprimée (74) dans laquelle la lumière, qui est illuminée par une source de lumière (70) et réfléchie par une partie métallique de la matière imprimée (74), apparaît à une luminosité maximale ou à une luminosité autour de la luminosité maximale sur l'écran initial de l'aperçu.

4. Système de traitement d'images (10) selon l'une quelconque des revendications 1 à 3, dans lequel le processeur (1002) est configuré pour :

acquérir une image représentant un environnement d'observation de la matière imprimée (74) ; et
spécifier une position de la source de lumière (70) sur la base d'informations de luminosité de l'image représentant l'environnement d'observation.

5. Système de traitement d'images (10) selon la revendication 4, dans lequel le processeur (1002) est configuré pour :
spécifier une position avec une luminosité la plus élevée dans l'image représentant l'environnement d'observation comme la position de la source de lumière (70).

6. Système de traitement d'images (10) selon la revendication 4 ou la revendication 5, dans lequel l'image représentant l'environnement d'observation est une image sphérique.

7. Système de traitement d'images (10) selon la revendication 1, dans lequel le processeur (1002) est configuré pour :
définir l'angle initial de la matière imprimée (74) et la position initiale du point de vue de sorte que le point de vue ne soit pas situé au niveau de la matière imprimée (74).

8. Système de traitement d'images (10) selon la revendication 1, dans lequel le processeur (1002) est configuré pour :
dans un cas où la matière imprimée (74) est inclinée dans une plage d'un angle prédéterminé à partir de l'angle initial de la matière imprimée (74) sur l'écran initial de l'aperçu, définir l'angle initial de la matière imprimée (74) et la position initiale du point de vue de sorte qu'une extrémité supérieure de la matière imprimée (74) ne tombe pas vers un côté avant par rapport au point de vue et une extrémité inférieure de la matière imprimée (74) ne se soulève pas au-dessus du point de vue.

9. Système de traitement d'images (10) selon la revendication 1, dans lequel le processeur (1002) est configuré pour : définir la position initiale du point de vue de sorte que la source de lumière (70) et le point de vue soient situés sur le même côté par rapport à la matière imprimée (74).

10. Système de traitement d'images (10) selon la revendication 1, dans lequel le processeur (1002) est configuré pour : définir l'angle initial de la matière imprimée (74) et la position initiale du point de vue de sorte qu'un vecteur de moitié d'un vecteur de la source de lumière (70) et d'un vecteur du point de vue corresponde à un vecteur normal dominant de la matière imprimée (74).

11. Système de traitement d'images (10) selon l'une quelconque des revendications 1 à 10, dans lequel la matière imprimée (74) inclut au moins l'une d'une matière colorante métallique ou d'une matière colorante transparente.

12. Procédé de traitement d'images comprenant :

amener une unité d'affichage (90) à afficher une image d'une matière imprimé (74) dans laquelle la lumière d'une source de lumière (70) réfléchie par la matière imprimée (74) apparaît à une luminosité maximale ou à une luminosité autour de la luminosité maximale, sur un écran initial d'un aperçu ;
le procédé étant **caractérisé en ce qu'**il comprend en outre :

définir, sur la base d'une position de la source de lumière (70), un angle de la matière imprimée (74) et une position d'un point de vue dans lequel la lumière réfléchie par la matière imprimée (74) est incidente sur le point de vue à la luminosité maximale ou à la luminosité autour de la luminosité maximale comme un angle initial de la matière imprimée (74) et une position initiale du point de vue, respectivement ; et
générer l'image de la matière imprimée (74) sur l'écran initial de l'aperçu sur la base de l'angle initial de la matière imprimée (74) et de la position initiale du point de vue, dans lequel un centre de la matière imprimée (74) est situé à une origine, et l'angle de la matière imprimée (74) est formé entre une ligne perpendiculaire de l'origine et une direction de la matière imprimée (74).

13. Produit de programme informatique comprenant des instructions qui, lorsque le programme est exécuté par un ordinateur, amènent l'ordinateur à mettre en œuvre les étapes du procédé de la revendication 12.

## FIG. 1

# FIG. 2

```
          ┌─────────┐
          │  START  │
          └────┬────┘
               │
               ▼
┌──────────────────────────────────┐
│ RECEIVE PRINTED IMAGE DATA AND    │──S100
│ PRINTING CONDITION                │
└──────────────┬───────────────────┘
               │
               ▼
┌──────────────────────────────────┐
│ SELECT COLOR CONVERSION TABLE     │──S102
└──────────────┬───────────────────┘
               │
               ▼
┌──────────────────────────────────┐
│ COLOR CONVERSION PROCESSING       │──S104
│ OF PRINTED IMAGE DATA             │
└──────────────┬───────────────────┘
               │
               ▼
┌──────────────────────────────────┐
│ RECEIVE ENVIRONMENT IMAGE DATA    │──S106
└──────────────┬───────────────────┘
               │
               ▼
┌──────────────────────────────────┐
│ SPECIFY LIGHT SOURCE POSITION FROM│──S108
│ ENVIRONMENT IMAGE DATA            │
└──────────────┬───────────────────┘
               │
               ▼
┌──────────────────────────────────┐
│ SET INITIAL VALUES OF CAMERA      │──S110
│ COORDINATES AND PRINTED MATTER    │
│ ANGLE                             │
└──────────────┬───────────────────┘
               │
               ▼
┌──────────────────────────────────┐
│ DISPLAY PREVIEW IMAGE             │──S112
└──────────────┬───────────────────┘
               │
               ▼
          ┌─────────┐
          │   END   │
          └─────────┘
```

EP 4 435 728 B1

# FIG. 3

FIG. 4

EP 4 435 728 B1

FIG. 5

FIG. 6

EP 4 435 728 B1

FIG. 7A

$\vec{L}(Xl, Yl, Zl)$

Θ

70

FIG. 7B

$\vec{L}(Xl, Yl, Zl)$

70

Θ

$\vec{V}(Xv, Yv, Zv) = \vec{V}(10, 0, 2)$

σ

78

FIG. 7C

$\vec{VH} = \vec{N}$

$\vec{L}(Xl, Yl, Zl)$

φ

Θ

70

$\vec{V}(Xv, Yv, Zv) = \vec{V}(10, 0, 2)$

σ

74

78

z
y
x

EP 4 435 728 B1

EP 4 435 728 B1

**FIG. 8A**

78

DISTANCE 10

$\sigma = 20°$

74

**FIG. 8B**

$\vec{L}$ (Xl, Yl, Zl)

70

$\Theta$

**FIG. 8C**

$\vec{L}$ (Xl, Yl, Zl)

70

$\vec{V}$ (Xv, Yv, Zv)

$\vec{VH} = \vec{N}$

$\Theta$

$\phi$

78

74

$\sigma$

z  y

x

FIG. 9A

FIG. 9B

FIG. 9C

## FIG. 10

(A) INITIAL SCREEN 100

(B) FRONT 100-1

(C) BACK 100-2

EP 4 435 728 B1

## FIG. 11A

33

| C,M,Y,K,SPOT COLOR | R,G,B,(ΔR,ΔG,ΔB) gloss |
|---|---|
| 0,0,0,0,0 | |
| 0,0,0,0,20 | |
| 0,0,0,0,60 | |
| 0,0,0,0,80 | |
| 0,0,0,0,100 | |
| ⋮ | ⋮ |
| 0,20,0,0,80 | 185,151,95, 69,88,88 |
| ⋮ | ⋮ |

## FIG. 11B

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015233240 A
- US 20150355867 A1
- US 2018150995 A1
- JP 2020052483 A